(19) Europäisches Patentamt
European Patent Office
Office européen des brevets

(11) Publication number: 0 194 095 A1

(12) **EUROPEAN PATENT APPLICATION**

(21) Application number: 86301356.1

(22) Date of filing: 26.02.86

(51) Int. Cl.⁴: C 03 B 9/33

(30) Priority: 02.03.85 GB 8505403

(43) Date of publication of application: 10.09.86 Bulletin 86/37

(84) Designated Contracting States: BE DE FR GB IT LU NL

(71) Applicant: Glass Bulbs Limited, Sheffield Road, Chesterfield Derbyshire, S41 8LD (GB)

(72) Inventor: Cox, William Alfred Lawrence, Pear Tree Farm Everton Nr. Bawtry, Doncaster South Yorkshire (GB)
Inventor: Inns, David Harold, 217 Eucaliptus, Los Cristianos Tenerife (ES)

(74) Representative: Fleming, Ian Alexander et al, THORN EMI Patents Limited The Quadrangle Westmount Centre Uxbridge Road, Hayes Middlesex, UB4 0HB (GB)

(54) **Improvements in the manufacture of stemware from a viscous settable material.**

(57) A method of producing an article of decorative stemware from a partly-formed article (1) includes marking the neck (4) of the partly-formed article before stretching it to form the stem (47) of the finished article (46).

A machine for producing at least one such article of decorative stemware from a respective partly-formed article has at least one forming tool (23) for marking the circumference of the neck of the partly-formed article and means (19, 20, 21) for causing the tool to mark the neck before stretching it.

The forming tool may be a toothed wheel.

19
20
22
17
16
18
23
22
49

EP 0 194 095 A1

# IMPROVEMENTS IN THE MANUFACTURE OF STEMWARE FROM A VISCOUS SETTABLE MATERIAL

This invention relates to the manufacture of stemware from glass or other material which, initially in a viscous state, may be set to a solid state after being formed into shape.

The invention is concerned with the manufacture of articles with stems of non-circular cross-section.

Patent numbers GB 833,590 and US 3,071,946 describe a method of manufacturing stemmed hollow articles from viscous settable materials. In this method a partly-formed article comprising a hollow bowl portion, a solid base portion and a neck portion between the base and bowl attaching the bowl to the base, the neck portion of greater cross-section and shorter than the length of the stem required in the finished article, is used. The neck is in a condition such that it is workable, or that it may be heated gently in order to render it workable. The stem is formed by applying a limited separating motion between the bowl and base so that the intervening neck portion elongates and its cross-section is reduced.

In order to produce a partly-formed article such as that described above, the bowl portion may be formed by blowing in a mould and the base and neck portions may be formed together by a pressing operation and later joined to the bowl. Alternatively, a charge of viscous settable material from which the article is to be made may be subjected to a preliminary blowing action and then suspended over a surface on which its lower end is allowed to settle as it elongates. The charge may then be subjected to a final blowing action in a mould in which the hollow bowl is blown into shape. The base of the mould may then be raised with respect to the sides so that the lower end of the charge is press-moulded into a solid base and joined to the bowl via a neck portion of constricted cross-section.

To produce a good surface finish on the partly-formed article, the charge is rotated inside the mould.

A drawback of the above process is that the shape of the partly-formed article is limited to a solid of rotation and hence the neck is of substantially circular cross-section.

British Patent No.2,045,227 describes a method of constructing an article of stemware from such a partly-formed article in which the stem of the finished article is of non-circular cross-section. This method involves squeezing the neck portion of the partly-formed article prior to stretching, by pressing radially inwardly on the neck portion with a plurality of flat surfaces which oppose one another or surround the neck portion.

The method described does however involve a complicated tong arrangement for the squeezing process.

It is an object of the present invention to provide a simpler method of producing, from viscous settable material, stemware with a generally circular cross-section and a circumference which varies from circular for example to have a decorative pattern.

According to the invention there is provided a method of producing an article of decorative stemware from a partly-formed article, the partly-formed article including a workable neck of viscous settable material, the neck being of greater cross-section and shorter than the intended stem of the finished article, the method including marking the circumference of the neck and then stretching the neck to form the stem of the finished article.

The invention embraces an article of stemware made by the method in the preceding paragraph.

According to a further aspect of the invention there is provided a machine for producing at least one article of decorative stemware from a respective at least one partly-formed article, the partly-formed article including a workable neck of viscous settable material, the neck being of greater cross-section and shorter than the intended stem of the finished article, the machine having at least one forming tool for marking the circumference of the neck of the partly-formed article and means for causing the tool to mark the neck before stretching the neck to form the stem of the finished article.

It is known that stem-stretching apparatus can be used to stretch the workable neck of a partly-formed article to form a stem. The inventors have found that if the neck is marked prior to stretching the marks remain on the stretched stem, although they become finer after stretching, and a decorative effect is produced. The stem may be twisted during the stretching process to produce a different decorative effect.

The circumference of the neck may be marked by urging a forming tool against it perhaps by spring means. This may occur while the partly-formed article is in stem stretching apparatus, before the neck is stretched. It may be necessary to heat the neck to make it sufficiently workable.

The forming tool may be rotatably mounted and may be brought into contact with the workable neck to follow rotation of the neck in stem-stretching apparatus when the tool is urged against the stem.

A plurality of stem stretching apparatuses may be combined in a stem stretching machine which may be used in conjunction with a machine for producing decorative stemware as in the invention. In this case a plurality of tools may be in co-operation with a plurality of necks in the stem-stretching machine, the tools being urged against respective ones of the necks by any suitable means.

In order that the invention may be clearly understood and readily carried into effect, it will be described by way of example only, with reference to the accompanying drawings, of which:

Figure 1 shows an example of a partly-formed article,

Figure 2 shows a typical stem stretching apparatus,

Figure 3 represents a machine to produce decorative stemware in accordance with the invention,

Figure 4 shows detail of a forming tool apparatus used in the machine,

Figure 5 is a schematic diagram representing the cam profile and path of the cam follower in the machine,

Figure 6 schematically represents relative positions of a stem stretching machine and machine to produce decorative stemware according to the invention, and

Figure 7 shows an example of a finished article with a reeded stem.

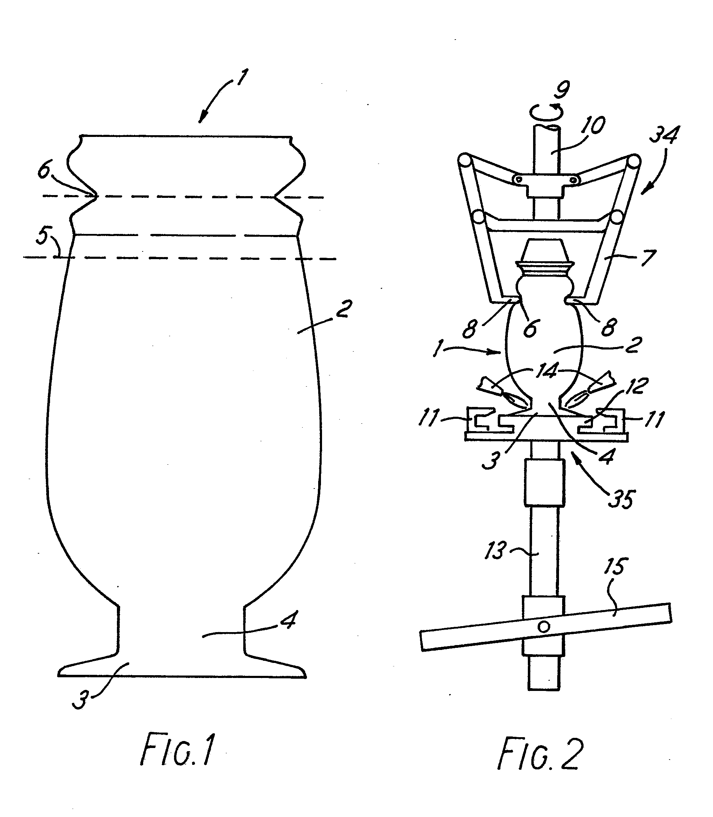

Referring first to Figure 1, this shows a partly-formed article 1, which may from the basis of an article of decorative stemware produced according to the invention, this particular article consisting of a bowl portion 2, a base 3 and a neck portion 4. The neck portion is shorter and of greater cross-section than that required in the finished article. The neck may be initially in a workable condition, or may be heated to make it workable. 5 represents the cutting line for the finished article and 6 a circumferential groove at which the partly-formed article may be supported during stem-stretching.

Figure 2 shows a partly formed article such as that shown in Figure 1 supported in a typical stem-stretching apparatus comprising top chuck 34 and bottom chuck 35. Supporting clamp 7 is mounted on central rod 10 which may rotate as indicated by arrow 9. Jaws 8 grip the partly-formed article, above its final cutting line. As the article rotates in the device, neck 4 may be heated, if necessary, to red heat, or until it is workable, by means such as gas burners 14. The base of the article 3 may rest on table 12, to which it may be clamped using clamps 11. The foot may then be pulled downwards either manually or mechanically by moving central rod 13 downwards using lever 15.

Stem-stretching apparatus in which the partly-formed article is inverted and the base or foot is supported, while the top section or bowl is pulled downwards, would be equally suitable.

When a method or machine to produce decorative stemware according to the invention is used, it is in operation between the neck being heated, if this is necessary, to make it workable, and the stem being stretched.

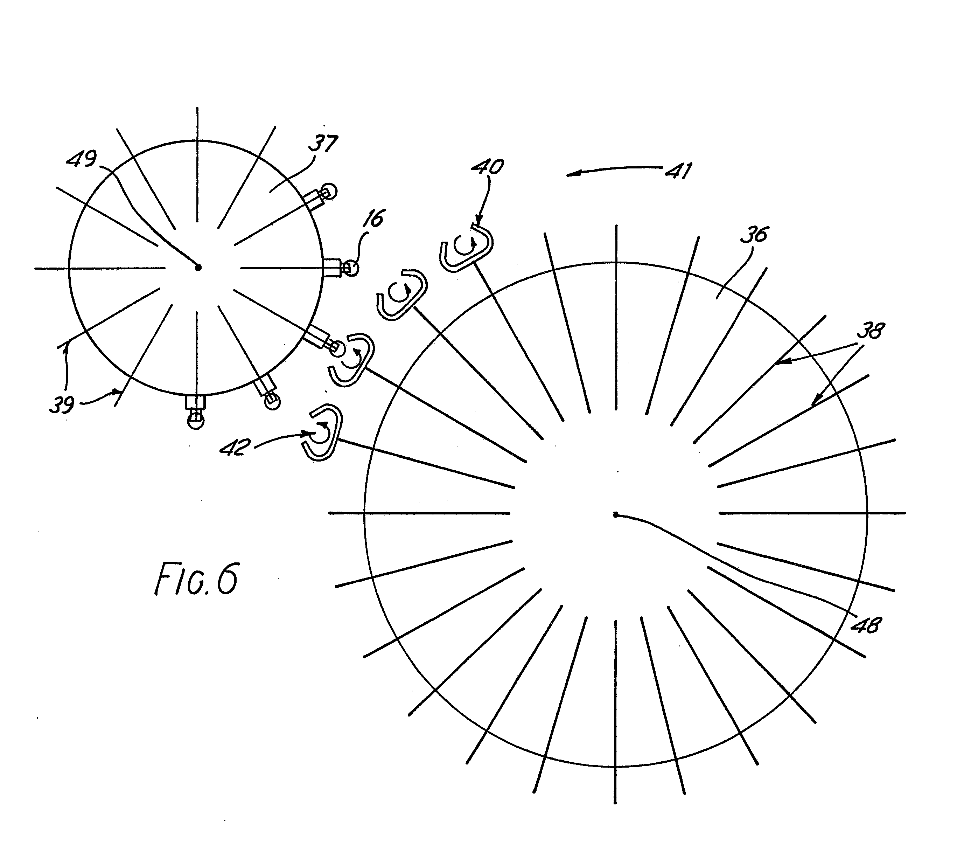

For convenience, the use of a machine to produce decorative stemware will be described in conjunction with a stem stretching machine which consists of a number, say twenty-four, of stem stretching apparatuses as described above, arranged about a central axis 48 (see Figure 6) about which they are rotating. The partly-formed articles additionally rotate about their own axes in the stem stretching machine.

Use of such machines in cooperation is a convenient method of producing decorative stemware in large quantities.

Reeded stems may then be produced by marking the hot, thus soft, undrawn stem 4, whilst it is revolving in the stem stretching machine just prior to stem stretching.

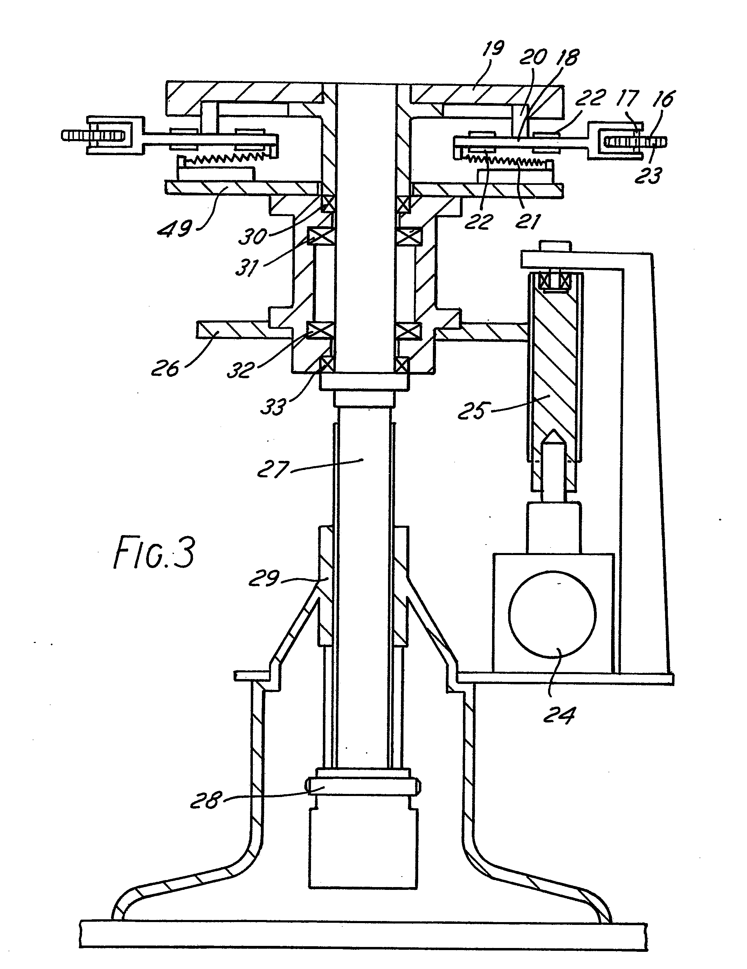

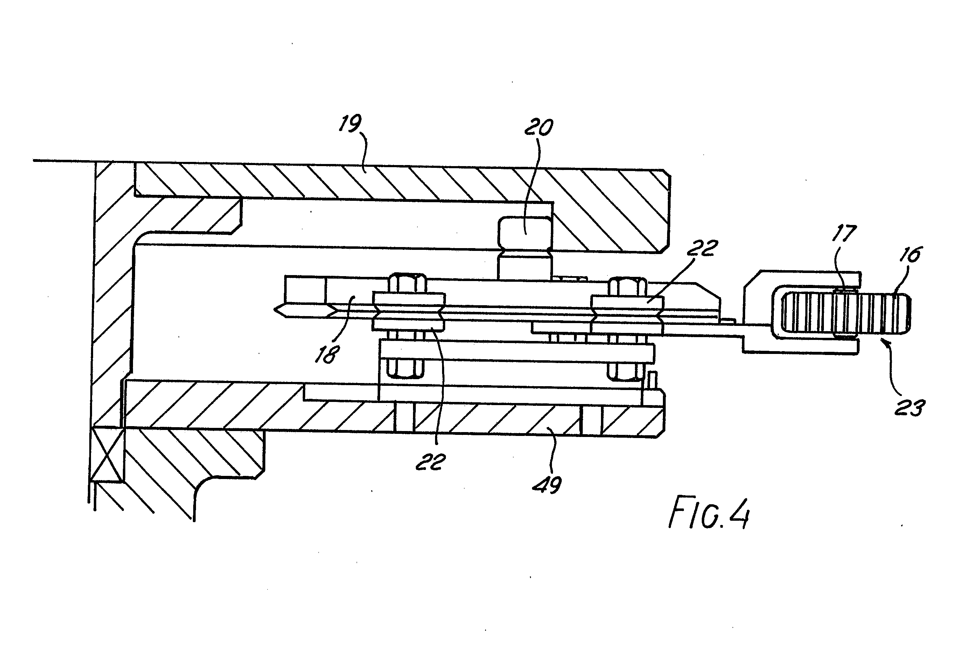

As before, the neck may be heated to a semi-molten viscous condition on its outer layer and then it may be marked with a forming tool such as the brass wheel 23, indicated in Figures 3 and 4. The tool may have teeth 16 which produce indentations in the soft material of the neck when in contact with it. To mark the complete circumference of the neck, this tool needs only to follow the unstretched stem through one revolution of the stem before being withdrawn from contact. When the stem is stretched, the number of indentations remains the same, but they become smoother and finer after stretching, so reeded grooves may be produced in the stem. The number of indentations in the stem may be altered by changing the forming tool for one with more or less teeth per inch.

The toothed wheel which produces the reeded effect may be replaced with, for example, a tool with a number of flat sides such as a six-sided tool. By driving this alternative tool, a straight or twisted stem with that facets may be produced. Altering the number of flats on the circumference of the forming tool produces a different number of facets on the unstretched stem.

If one end of the neck is rotated relative to the other during stretching, the finished stem will be twisted. For example, if, in a stem stretching apparatus, the top chuck 34 is rotated whilst the base of the article is held stationary by the bottom chuck 35, reeding of the stretched stem will be twisted, so giving an alternative decorative effect. In the specific example when the top chuck is rotated for one revolution whilst the base is held stationary, the reeding will be twisted by one turn from top to bottom. Alternatively, the top chuck holding the article may be kept stationary whilst the bottom chuck is rotated, and in either case several complete rotations or parts of rotations may be made.

In order to permit the top chuck to revolve whilst the bottom chuck remains stationary, the well-known practice of providing a toothed gear wheel and a length of toothed path for it to follow may be employed. The toothed gear wheel may be attached to the top of the top chuck, and the length of toothed path provided, or the time for which the toothed gear wheel is in contact with the path, then determines the angle of rotation of the chuck. A similar arrangement would permit rotation of the bottom chuck.

Reeding can, of course, be applied to the unstretched stem of any article manufactured on any rotary blowing machine or press.

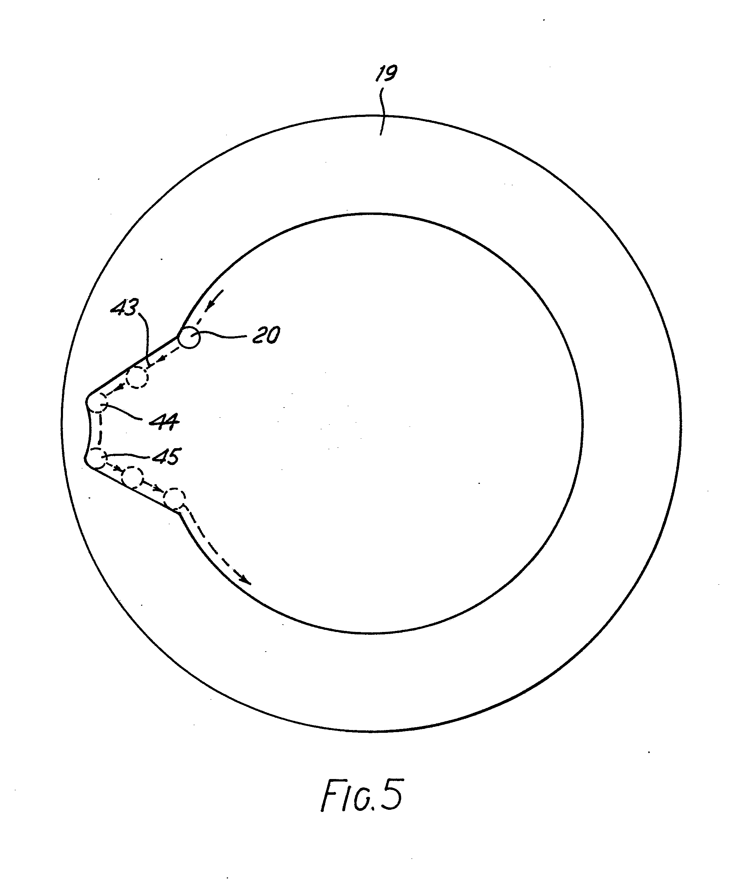

Figure 3 shows one embodiment of a machine to produce decorative stemware according to the invention. The machine is basically a revolving carousel of forming tools, detail of which is shown in Figure 4. Each forming tool or reeding wheel 23 may have indentations 16 and may be rotatably mounted, for example on axle 17 on slidable means such as slideway 18. The forming tool moves under the influence of spring means (not shown in Figure 4), such as spring 21 which urges it against the neck of a partly-formed article and it is forced outwards to follow cam means such as a stationary cam 19, the profile of which is shown in Figure 5. Each slideway is slidable relative to a base member 49, and is mounted to it by means such as four diabolo rollers 22. Each tool has a cam follower such as cam follower 20 associated with it, which follows the cam profile which is such that each forming tool in turn is caused to move outwards to make contact with the neck of an article in the stem stretching machine for a predetermined angle of rotation of the neck before being withdrawn. The slideway is thus constrained to move substantially radially on the base 49. The forming tool, when it makes contact with the neck, may, as in this case, follow the rotary motion of the neck for one revolution only of the neck due to the geometry of the cam. For example, if the cam follower 20 follows the path 43 as indicated in Figure 5, the tool will be in contact with the neck when the follower is between positions 44 and 45, and the tool is at a constant radius relative to the stem-stretching machine between these positions. The forming tool leaves a pattern in the surface of the hot glass around the entire circumference of the unstretched neck. When the forming tool is retracted, the base of the article is gripped by the bottom chuck of the stem-stretching apparatus and the neck is stretched as before.

In this embodiment, referring to Figure 3, the drive shaft 24 from the stem stretching machine drives pinion 25 which rotates the main gear 26 which causes the base member 49, carrying the forming tools 16, to rotate about its central axis. The pinion face width is extended to allow for gear contact when the height is adjusted. This is necessary if the machine is to be used for different items of stemware. Height adjustment may be carried out by turning a worm shaft which rotates wormwheel nut 28 which lifts the centre shaft 27. A key may be placed inside the support casing 29 to prevent shaft rotation. Thus the shaft and cam are stationary and separated from moving parts by bearings 30, 31, 32 and 33.

Figure 6 schematically represents the relationship between the revolving part 36 of a stem-stretching machine and the revolving carousel 37 of forming tools. Lines 38 represent positions of stem stretching apparatuses substantially as shown in Figure 2 and lines 39 represent positions of forming tools 16 as shown in Figure 4. The carousel of forming tools rotates clockwise about its axis 49 and that of stem-stretching apparatuses about axis 48 in the direction indicated by arrow 41. Gas burners 40 are provided for heating the necks of the partly formed articles and arrows 42 represent the individual directions of rotation of the articles in the stem stretching machine about their own axes. The gear ratio between the two machines depends on the relative sizes of the revolving parts and the relative numbers of forming tools and stem-stretching apparatuses. The relative motion between the tools and stem-stretching apparatuses governs the required cam profile, as does the relative number of tools and stem-stretching apparatuses.

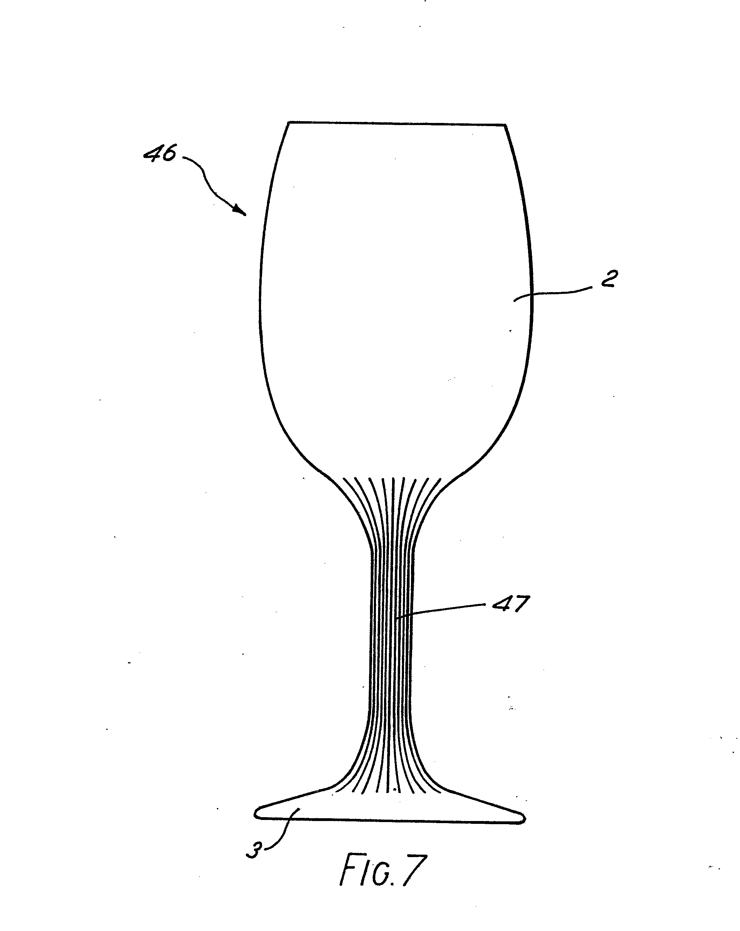

Figure 7 shows an example of a finished article 46, comprising bowl 2, base 3 and reeded stem 47 produced using a toothed wheel as a forming tool.

The invention obviously does not apply only to articles comprising a hollow bowl portion, a solid base portion and a stem joining the bowl to the base, but to any article which may have a similar stem to that described, or even to a stem itself which could be later attached to an article if desired.

The forming tool need not necessarily be a brass wheel but of any suitable design and construction for a particular application.

The tools may not necessarily be caused to be urged against the necks of the partly-formed articles, as in the described embodiment, by cam means with a suitable profile together with cam followers, but by any other guiding means suitable for a particular aplication.

In the preferred embodiment, the forming tool only marks one complete circumference of the stem, for example by only being in contact with the neck for one revolution of the neck. However, in some circumstances, it may be suitable for only part of the circumference to be marked or, for example, for the markings to continue for more than one revolution of the stem.

It may be unnecessary for the marking machine to be geared to the stem-stretching machine, provided that their movements are suitably synchronised.

CLAIMS

1. A method of producing an article of decorative stemware from a partly-formed article, the partly-formed article including a workable neck of viscous settable material, the neck being of greater cross-section and shorter than the intended stem of the finished article, the method including marking the circumference of the neck and then stretching the neck to form the stem of the finished article.

2. A method according to Claim 1 in which the marking is produced by bringing a rotatably mounted forming tool into contact with the workable neck so that it follows the rotary motion of the neck.

3. A method according to Claim 2 in which the forming tool is a wheel having teeth which produce indentations in the workable neck when in contact with it.

4. An article of decorative stemware produced by the method according to any one of Claims 1 to 3.

5. A machine for producing at least one article of decorative stemware from a respective at least one partly-formed article, the partly-formed article including a workable neck of viscous settable material, the neck being of greater cross-section and shorter than the intended stem of the finished article, the machine having at least one forming tool for marking the circumference of the neck of the partly-formed article and means for causing the tool to mark the neck before stretching the neck to form the stem of the finished article.

6. A machine according to Claim 5 in which the forming tool is rotatably mounted.

7. A machine according to Claim 5 or Claim 6 adapted to cooperate with a stem-stretching machine which comprises a plurality of stem-stretching apparatuses, so that the at least one forming tool marks the circumference of the neck of at least one partly-formed article in a respective one of said stretching apparatuses prior to stretching.

8. A machine according to any one of Claims 5 to 7 in which the means for causing the at least one forming tool to mark the neck include means for urging the forming tool against the neck of the respective partly-formed article in stem-stretching apparatus.

9. A machine according to Claim 8 in which the means for causing the tools to be urged against respective ones of said necks comprise cam means.

10. A machine according to any one of Claims 5 to 9 in which the forming tool is a toothed wheel.

1
6
5
2
4
3
9
10
34
7
8
6
8
1
2
14
12
11
11
3
4
35
13
15

FIG.1

FIG.2

19
20
18
22
17
16
23
49
30
22
21
31
26
32
33
25
27
29
24
28

FIG.3

16
23
17
22
20
49
22
19
18
FIG. 4

19
43
20
44
45

FIG. 5

38
48
36
41
40
16
37
42
49
39

FIG. 6

46
2
47
3

FIG. 7

0194095

European Patent Office

# EUROPEAN SEARCH REPORT

Application number

EP 86 30 1356

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | | | C 03 B 9/33 |
| Y | US-A-3 934 997 (INNS)<br>* Whole document *<br>--- | 1-3,5-7 | |
| Y | GB-A-1 444 622 (RANSON)<br>* Figures 14,15; page 3, lines 39-117; claim 5 *<br>--- | 1 | |
| A | GB-A- 904 817 (HOFBAUER)<br>* Whole document *<br>----- | | |
| | | | TECHNICAL FIELDS SEARCHED (Int. Cl.4) |
| | | | C 03 B 9/00 |

The present search report has been drawn up for all claims

| Place of search | Date of completion of the search | Examiner |
|---|---|---|
| THE HAGUE | 22-04-1986 | VAN DEN BOSSCHE W.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82